Europäisches Patentamt

European Patent Office

Office européen des brevets

(19)

(11) Veröffentlichungsnummer : **0 333 632 B1**

(12) # EUROPÄISCHE PATENTSCHRIFT

(45) Veröffentlichungstag der Patentschrift :
**30.09.92 Patentblatt 92/40**

(51) Int. Cl.$^5$ : **C01B 3/56**

(21) Anmeldenummer : **89730019.0**

(22) Anmeldetag : **26.01.89**

(54) **Anlage zur Verdichtung von Wasserstoffgas.**

(30) Priorität : **17.03.88 DE 3809680**

(43) Veröffentlichungstag der Anmeldung :
**20.09.89 Patentblatt 89/38**

(45) Bekanntmachung des Hinweises auf die
Patenterteilung :
**30.09.92 Patentblatt 92/40**

(84) Benannte Vertragsstaaten :
**DE ES FR GB IT**

(56) Entgegenhaltungen :
**EP-A- 0 115 159
DE-A- 3 104 260
US-A- 4 108 605
US-A- 4 402 187
US-A- 4 444 727**

(73) Patentinhaber : **HWT GESELLSCHAFT FÜR
HYDRID- UND WASSERSTOFFTECHNIK MBH
Wiesenstrasse 36
W-4330 Mülheim/Ruhr (DE)**

(72) Erfinder : **Halene, Clemens, Dipl.-Ing.
Pigageallee 23
W-4000 Düsseldorf 13 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

## Beschreibung

Die Erfindung betrifft eine Anlage zur Verdichtung von Wasserstoffgas gemäß dem Oberbegriff des Patentanspruchs 1.

Aus der DE-AS 26 41 487 ist es bekannt, Wasserstoffgas mit Hilfe eines Hydridspeichers zu komprimieren, indem das Wasserstoffgas zunächst unter niedrigem Druck in den Hydridspeicher eingeleitet wird. Die durch die einsetzende Hydridbildung (Hydrierphase) frei werdende Warme (Bindungsenthalpie) wird mit Hilfe eines Kühlmediums fortlaufend aus dem Hydridspeicher abgeführt. Nach Erreichen der maximalen Speicherbeladung wird der Hydridspeicher erwärmt, so daß die gebildeten Hydride wieder zu zerfallen beginnen (Dehydrierphase) und der Wasserstoffgasdruck im Hydridspeicher auf einen Maximalwert ansteigt (Gleichgewichtsdruck). Der Druckwasserstoff wird gemäß dieser Schrift zum Betrieb einer Entspannungsgasturbine mit dem Ziel der Gewinnung elektrischer Energie benutzt und läuft in einem geschlossenen Kreislauf um. Zur Erwärmung des Hydridspeichers wird der Strom eines vorhandenen Wärmeträgermediums von weniger als 232°C benutzt. Die bekannte Anwendung geht davon aus, daß die Fluidströme für das Kühl- und das Heizmedium ohnehin vorhanden sind und technisch nicht sinnvoll in anderer Weise genutzt werden können.

Weiterhin ist es bekannt, Hydridspeicher allein zum Zwecke der Wasserstoffverdichtung zu betreiben, wenn z.B. besondere Anforderungen an die Reinheit des Wasserstoffgases gestellt werden, da Verunreinigungen, wie sie bei mechanischen Verdichtern infolge der Notwendigkeit von Schmiermitteln verursacht werden, hierbei vermieden werden.

Während der benötigte Kühlmittelstrom (Wärmesenke) für die Hydrierphase in der Regel in Form von Oberflächen- oder Brunnenwasser relativ kostengünstig zur Verfügung gestellt werden kann, erfordert die Bereitstellung des Hiezmediumstromes (Wärmequelle) für die Dehydrierungsphase im allgemeinen einen größeren Aufwand in Form von Primärenergie oder elektrischem Strom, da man nicht davon ausgehen kann, daß z.B. ein entsprechender Abwärmestrom nahezu kostenlos nutzbar ist. In der Regel wird daher als Wärmequelle ein konventionelles Heizgerät zur Erzeugung von Warmwasser (Durchlauferhitzer) Verwendung finden. Neben dem Energieaufwand fällt bei dieser Vorgehensweise auch der Aufwand für die Wasseraufbereitung ins Gewicht.

Aufgabe der Erfindung ist es daher, eine Anlage zur Verdichtung von Wasserstoffgas anzugeben, deren Betrieb einen möglichst geringen Aufwand an Energie erfordert.

Gelöst wird diese Aufgabe durch eine Anlage mit den Merkmalen des Patentanspruchs 1; vorteilhafte Weiterbildungen der Erfindung sind in den Unteransprüchen 2 - 6 angegeben.

Die Erfindung sieht vor, daß die Durchleitung der Medienströme für die wechselweise Kühlung und Beheizung des oder der eingesetzten Hydridspeicher als geschlossene Kreisläufe gestaltet sind, so daß kein laufender Aufwand z.B. für eine Wasseraufbereitung mehr notwendig ist. Darüberhinaus wird das Aggregat (Wärmepumpe), das als Wärmequelle dient, gleichzeitig auch als Wärmesenke eingesetzt. Damit wird die Kühlleistung der Wärmepumpe, die beim normalen Betrieb einer Wärmepumpe als Heizaggregat eher als ungünstiger Effekt (Umweltbeeinträchtigungen) anzusehen ist, für den technischen Prozeß der Hydrierung/Dehydrierung unmittelbar genutzt.

Während die Wärmemenge der Bindungsenthalpie des Metallhydrids und der inneren Wärme des Hyrdridspeichers zwischen den Phasen der Hydrierung und Dehydrierung gleichsam "hin- und hergeschoben" wird, muß lediglich die für die eigentliche Kompressionsarbeit erforderliche Energiemenge in Form der Antriebsenergie für die Wärmepumpe von außen in den Prozeß eingebracht werden. Die erfindungsgemäße Anlage ermöglicht es, gegenüber bisherigen Anlagen höhere Hydridspeicherbeladungen zu erzielen, da die Temperatur der Wärmesenke in Abhängigkeit von dem für den inneren Kreislauf der Wärmepumpe gewählten Kühlmittel gegenüber der Temperatur von z.B. Brunnenwasser deutlich abgesenkt werden kann. Eine geringere Speichertemperatur führt bei gleichem Beladungsdruck zu einer höheren Wasserstoffkonzentration.

Wenn die Hydridspeicher für die Wasserstoffverdichtung jeweils paarweise eingesetzt und die einzelnen Hydridspeicher eines Paares im Gegentakt betrieben werden, kann die in der Hydrierphase des einen Hydridspeichers frei werdende Bindungsenthalpie zur selben Zeit in der Dehydrierphase des anderen Hydridspeichers genutzt werden. Liegt dagegen nur ein Hydridspeicher vor oder werden bei mehreren Hydridspeichern diese im Gleichtakt betrieben, ist jeweils ein Zwischenspeicher für Kälte bzw. Wärme in den Kühl- bzw. Heizkreislauf einzuschalten. Die Wärmepumpe ist dann indirekt über diese Zwischenspeicher mit den beiden Kreisläufen gekoppelt.

Eine hinsichtlich des Wärmetauschs besonders effektive Lösung ergibt sich, wenn man das Kältemittel des inneren Kreislaufs der Wärmepumpe unmittelbar durch die Mäntel eines im Gegentakt betriebenen Hydridspeicherpaares leitet. In diesem Fall werden der Kühlkreislauf und der Heizkreislauf der Hydridspeicher mit dem inneren Kreislauf der Wärmepumpe zu einem einzigen Kreislauf integriert, so daß die Mäntel der Hydridspeicher abwechselnd zum Kondensator bzw. Verdampfer der Wärmepumpe werden.

Um höchste Verdichtungsdrücke zu erreichen, kann die erfindungsgemäße Anlage auch mehrstufig ausgelegt sein. Dabei wird dann den Hydridspeichern einer nachgeschalteten Stufe der Wasserstoff bereits unter hohem Druck aus dem vorgeschalteten Hydridspeicher zugeführt, so daß sehr hohe Wasserstoffkonzentrationen erreicht werden. Die Beheizung eines in dieser Weise hoch beladenen Hydridspeichers führt zu außerordentlich hohen Gleichgewichtsdrücken. Selbstverständlich läßt sich das Druckniveau auch durch eine geeignete Auswahl des Hydridmetalls sowie durch die Temperaturlagen des Heiz- und Kühlkreislaufs beeinflussen.

Ein besonders effektiver Betrieb ergibt sich bei einer Verdichteranlage mit paarweisen Hydridspeichern, wenn eine durch ein Ventil zu öffnende Kurzschlußleitung zwischen den im Gegentakt betriebenen Hydridspeichern vorgesehen ist. Am Ende einer Dehydrierphase steht nämlich in der Regel noch eine beträchtliche Menge an Wasserstoffgas mit im Vergleich zum Druck des zur Verfügung stehenden unverdichteten Wasserstoffgases hohem Druck in dem "entladenen" Hydridspeicer zur Verfügung. Wenn nach Schließen des Wasserstoffeinlaßventils in der Wasserstoffzuleitung des gerade "beladenen" Hydridspeichers das Ventil dieser Kurzschlußleitung geöffnet wird, kommt es zum Druckausgleich in beiden Speichern, also zum überströmen eines weiteren Teils an Wasserstoff aus dem an sich bereits "entladenen" in den "beladenen" Hydridspeicher. Auf diese Weise wird die in einem Be-/Entladezyklus als verdichteter Wasserstoff freisetzbare Menge deutlich erhöht. Wenn während dieses "Kurzschlusses" der Kühl- und der Heizkreislauf abgeschaltet werden, ergibt sich ein weiterer Vorteil für den nächsten Arbeitstakt der beiden Hydridspeicher: Das Absinken des Wasserstoffdrucks in dem "entladenen" Hydridspeicher führt zu weiterer Freisetzung von Wasserstoffgas (fallender Gleichgewichtsdruck) und damit automatisch und außerordentlich rasch zu einer Abkühlung dieses vorher erhitzten Hydridspeichers, so daß dieser Hydridspeicher bereits in die Kühlphase für den anstehenden Vorgang der Wiederbeladung übergeht.

Umgekehrt bewirkt die zusätzliche Wasserstoffzufuhr unter dem erhöhten Druck bei dem "beladenen" und zu diesem Zweck gekühlten Hydridspeicher eine zusätzliche Beladung (wegen Erhöhung des Gleichgewichtsdrucks), so daß infolge der bei der Hydrierung freigesetzten Wärme dieser Hydridspeicher sehr schnell erwärmt wird. Dadurch wird also die Umschaltung der beiden Hydridspeicher zwischen der Hydrier- und der Dehydrierphase außerordentlich beschleunigt.

Anhand der in den Figuren 1 bis 5 dargestellten Ausführungsbeispiele wird die Erfindung im folgenden näher erläutert. Es zeigen:

Figur 1 eine erfindungsgemäße Verdichteranlage mit getrenntem Heiz- und Kühlkreislauf,

Figur 2 eine abgewandelte Anlage gemäß Figur 1 mit integriertem Hiez-/Kühlkreislauf,

Figur 3 eine zweistufige Verdichteranlage mit Wärme- und Kältezwischenspeicher,

Figur 4 und Figur 5 die Abhängigkeit des Gleichgewichtsdruck bei gegebener Temperatur von der Wasserstoffkonzentration bei verschiedenen Hydridmetallen.

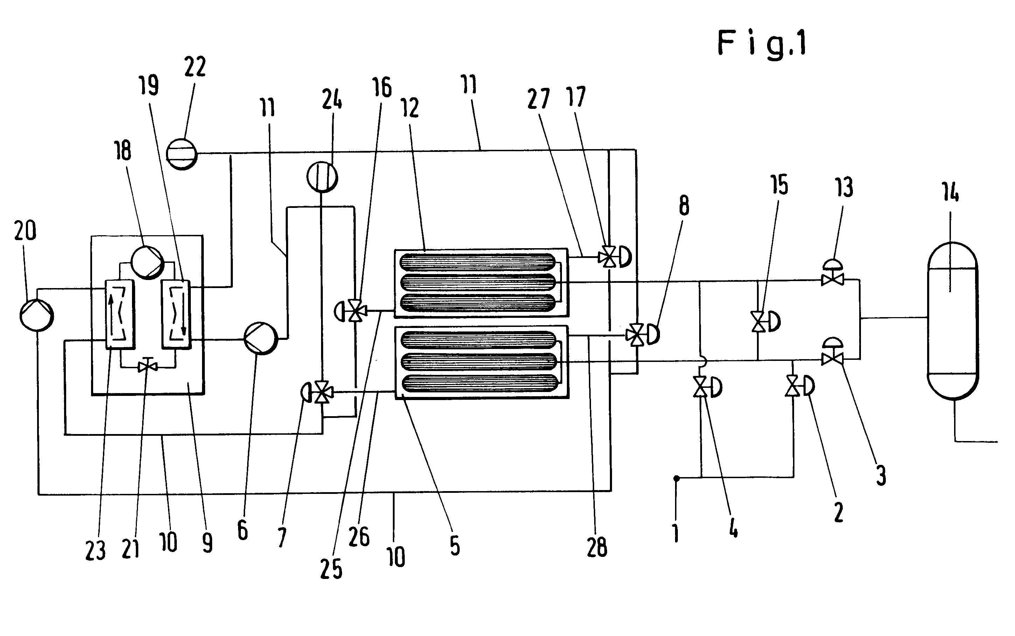

Der Verdichterteil der in Figur 1 dargestellten Anlage besteht aus zwei parallel geschalteten Hydridspeicheranlagen 5 und 12, die hinsichtlich ihres Be- und Entladerhythmus im Gegentakt betrieben werden. Sie sind baugleich ausgeführt, so daß die Wärmemengen der Hydridbindungsenthalpie für beide gleich groß sind.

Zur Beladung z.B. des Hydridspeichers 5 wird aus einem nicht dargestellten Vorratsbehälter Wasserstoffgas mit geringem Druck (z.B. 2 bar) entnommen und über die Leitung 1 in die Verdichteranlage gegeben. Die Ventile 3, 4 und 15 sind geschlossen, so daß das Wasserstoffgas über das geöffnete Ventil 2 in den Hydridspeicher 5 einströmt und unter Freisetzung von Wärme mit der metallischen Speicherfüllung Metallhydrid bildet. Zu gleicher Zeit wird der mit Wasserstoff beladene Hydridspeicher 12 über das geöffnete Ventil 13 z.B. zur Befüllung des Druckgasbehälters 14 entladen. Der Druckgasbehälter 14 ist also als Verbraucher für den komprimierten Wasserstoff anzusehen. Während zur Unterstützung der Hydridbildung (Hydrierphase) die entstehende Wärme abgeführt wird, der Hydridspeicher 5 also gekühlt werden muß, wird im Hydridspeicher 12 Wärme für die Dehydrierung, d.h. für die Freisetzung des Wasserstoffgas unter erhöhtem Druck benötigt. Um diesen Wärme- und Kältebedarf zu decken, sind ein Heizkreislauf 11 und ein Kühlreislauf 10 vorgesehen, die jeweils in sich geschlossene Systeme darstellen. Während der Kühlkreislauf 10 an den Wärme von außen aufnehmenden Wärmetauscher 23 (Verdampfer) der Wärmepumpe 9 angeschlossen ist, ist der Heizkreislauf 11 an den Wärme nach außen abgebenden Wärmetauscher 19 dieser Wärmepumpe 9 angeschlossen. Als Wärme- und Kälteträgermedium ist in beiden Kreisläufen mit Frostschutz versetztes Wasser eingesetzt. Das Kühlwasser wird durch die Umwälzpumpe 20 durch den Verdampfer 23 geleitet und bringt infolge seines indirekten Kontaktes mit dem Kältemittel des inneren Kreislaufs der Wärmepumpe 9 dieses Kältemittel zum Verdampfen, gibt also Wärme ab und verläßt den Wärmetauscher 23 mit niedriger Temperatur (z.B. -10°C). Über das Ventil 7 wird das Kühlwasser durch die Leitung 26 in den Mantel des gerade beladen werdenden Hydridspeichers 5 eingeleitet, kühlt den Hydridspeicher 5 ab und verläßt mit erhöhter Temperatur den Mantel des Hydridspeichers 5 über die Leitung 28 und das Ventil 8 in Richtung auf den Verdampfer 23, wo es die auf-

3

genommene Wärme wieder abgibt.

Diese Wärme wird über den inneren Kältemittelkreislauf der Wärmepumpe 9, der einen Verdichter 18 und eine Drossel 21 aufweist, auf ein höheres Temperaturniveau gebracht und mit Hilfe des Wärmetauschers 19 (Kondensator) an den Heizkreislauf 11 abgegeben, der von der Umwälzpumpe 6 in Gang gehalten wird. Das im Kondensator 19 auf eine höhere Temperatur (z.B. 60°C) gebrachte Wasser tritt über das Ventil 17 und die Leitung 27 in den Mantel des Hydridspeichers 12 ein und gibt seine Wärme zur Dehydrierung des Speicherinhalts an diesen ab. Das Heizwasser verläßt den Mantel des Hydridspeichers 12 mit entsprechend verminderter Temperatur über die Leitung 25 und das Ventil 16 in Richtung auf den Kondensator 19, um dort erneut Wärme aufzunehmen. Dieser Wärmetransport von dem Hydridspeicher 5 über die Wärmepumpe 9 zum Hydridspeicher 12 hält so lange an, bis der Hydridspeicher 5 seine maximale Beladung bei der erreichbaren Speicherkühlung und dem zur Verfügung stehenden Einspeisungsdruck des Wasserstoffgas-Vorratsbehälters erreicht hat und der Hydridspeicher 12 auf das vorgesehene Maß entladen ist. Durch die hohe Temertur des Hydridspeichers 12 ist sein Entladedruck sehr hoch (z.B. 50 - 200 bar). Die über die reine Bindungsenthalpie hinaus zur Verdichtung des Wasserstoffs benötigte Energie wird über die Antriebsleistung der Wärmepumpe 9 in das System eingebracht; ansonsten wird die überschüssige Wärme aus einem Hydridspeicher zu dem anderen Hydridspeicher transportiert, wo sie benötigt wird. Wenn der Be- und Entladevorgang abgeschlossen sind, werden die Ventile 7, 8, 16 und 17 umgeschaltet, so daß der Hydridspeicher 5 an den Heizkreislauf 11 und der Hydridspeicher 12 an den Kühlkreislauf 10 angeschlossen werden. Gleichzeitig werden auch die Wasserstoffgasventile 2, 3, 4 und 13 umgeschaltet, so daß die Abgabe von Druckwasserstoff aus dem Hydridspeicher 5 über das Ventil 3 stattfindet und gleichzeitig der Hydridspeicher 12 neu beladen wird. Um den Heizkreislauf 11 abzusichern, sind die Dehngefäße 22 und 24 vorgesehen.

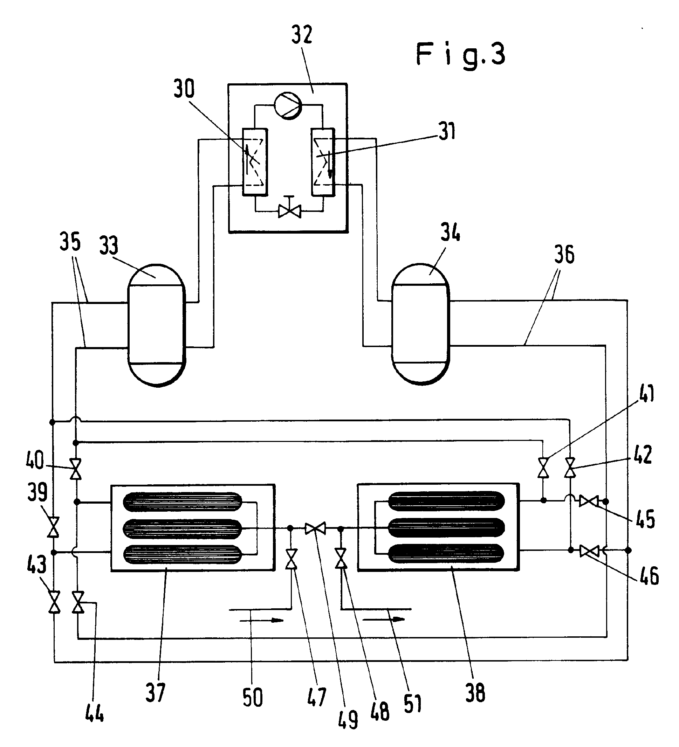

Im Unterschied zu der beschriebenen Art der direkten "Wärmeverschiebung" zwischen Hydridspeichern gleicher Bauart, die im Gegentakt betrieben werden, läßt sich der energiesparende Einsatz einer Wärmepumpe unter Ausnutzung sowohl ihrer Heiz- als auch ihrer Kühlleistung auch bei nur einem Hydridspeicher oder bei mehreren, aber im Gleichtakt betriebenen Hydridspeichern realisieren. Hierzu bedarf es lediglich einer indirekten Kopplung des Verdampfers und des Kondensators der Wärmepumpe mit dem Kühl- bzw. Heizkreislauf, indem jeweils ein Kältezwischenspeicher bzw. ein Wärmezwischenspeicher zwischengeschaltet wird, so daß eine zeitliche Entkopplung von Wärme- und Kältebedarf erreicht wird. In Figur 3 ist ein solcher Kältezwischenspeicher 33 mit dem Verdampfer 30 und ein Wärmezwischenspeicher 34 mit dem Kondensator 31 einer Wärmepumpe 32 kreislaufmäßig verbunden.

Das Ventil 15 in Figur 1 ermöglicht es, einen Druckausgleich zwischen den beiden Hydridspeichern 5 und 12 herzustellen. Dies führt zu einem überströmen von Wasserstoffgas aus dem Hydridspeicher mit dem höheren Gleichgewichtsdruck in den mit dem niedreigeren und bewirkt in letzterem eine weitere Hydrierung mit entsprechender Wärmefreisetzung und in dem ersteren eine weitere Dehrdrierung unter entsprechender Abkühlung. Es ist daher zweckmäßig, am Ende eines Be- und Entladezyklus bei geschlossenen Ventilen 2, 3, 4 und 13 das Ventil 15 zu öffnen. Der Druck in dem bereits weitegehend entladenen Hydridspeicher ist regelmäßig noch erheblich höher als in dem gerade beladenen Hydridspeicher, so daß die Beladung des letzteren noch weiter erhöht wird und dadurch bei der Entladung freisetzbare Wasserstoffgasmenge um diesen Betrag vorgrößert wird. Ein weiterer positiver Effekt ist, daß sich infolge der Freisetzung bzw. Aufnahme von Bindungsenthalpie des Hydrids die Temperaturen der Hydridspeicher sehr schnell in die Richtung bewegen, die für den nächsten Arbeitszyklus, der eine Umschaltung des Kühl- und des Heizkreislaufs auf den jeweils anderen Hydridspeicher erfordert, benötigt werden.

Um diesen Effekt nicht zu stören, sollten beide Kreisläufe während des vorübergehenden wasserstoffseitigen Kurzschlusses entweder unterbrochen oder bereits umgeschaltet sein.

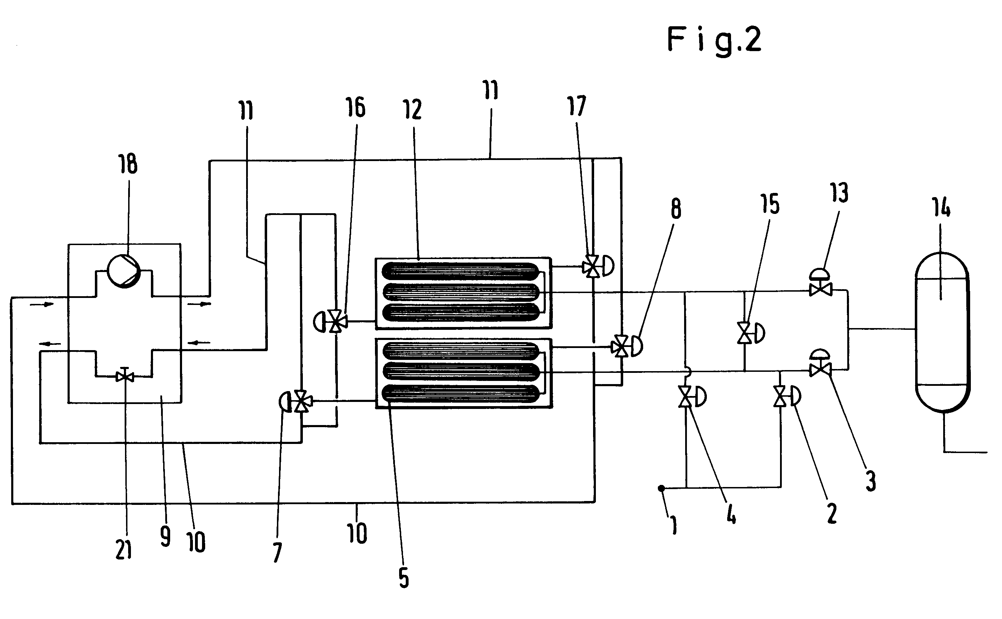

Das Anlagenschema gemäß Figur 2 ist dem Schema in Figur 1 weitgehend ähnlich. Im Unterschied dazu wird jedoch kein Wasser als Medium für den Heiz- und den Kühlkreislauf eingesetzt. Statt dessen wird das Kältemittel aus der Wärmepumpe 9 unmittelbar sowohl für die Heizung als auch die Kühlung der Hydridspeicher 5 und 12 verwendet. Heizkreislauf 11 und Kühlkreislauf 10 sind nicht mehr getrennt voneinander, sondern bilden zusammen mit dem ursprünglichen inneren Kältemittelkreislauf der Wärmepumpe einen gemeinsamen Kreislauf. Die Funktionen des Verdampfers und des Kondensators sind direkt in die Mäntel der beiden Hydridspeicher verlegt: Das Kältemittel strömt aus dem Verdichter 18 z.B. über das Ventil 17 in den als Kondensator fungierenden Mantel des Hydridspeichers 12 ein, gibt Wärme ab und verläßt den Mantel des Hydridspeichers 12 über das Ventil 16 auf dem Weg zur Drossel 21, wo das Kältemittel unter weiterer Abkühlung entspannt wird. Es wird dann über das Ventil 7 in den als Verdampfer arbeitenden Mantel des Hydridspeichers 5 eingeleitet und erwärmt sich. Dann tritt das erwärmte Kältemittel wieder aus dem Mantel des Hydridspeichers 5 aus und wird über das Ventil 8 zurück zum Kompressor 18 der Wärmepumpe 9 geleitet.

Figur 3 zeigt eine zweistufige Verdichteranlage mit den hintereinander geschalteten Hydridspeichern 37 und 38. Über die Leitung 50 kann unverdichteter Wasserstoff bei geöffnetem Ventil 47 und geschlossenem Ventil 49 in den Hydridspeicher 37 eingeleitet und als Hydrid gespeichert werden. Über die Ventile 39 and 40 kann der Hydridspeicher 37 an den Kühlkreislauf 35 mit dem Kältezwischenspeicher 33 angeschlossen werden, bis die Beladung beendet ist.

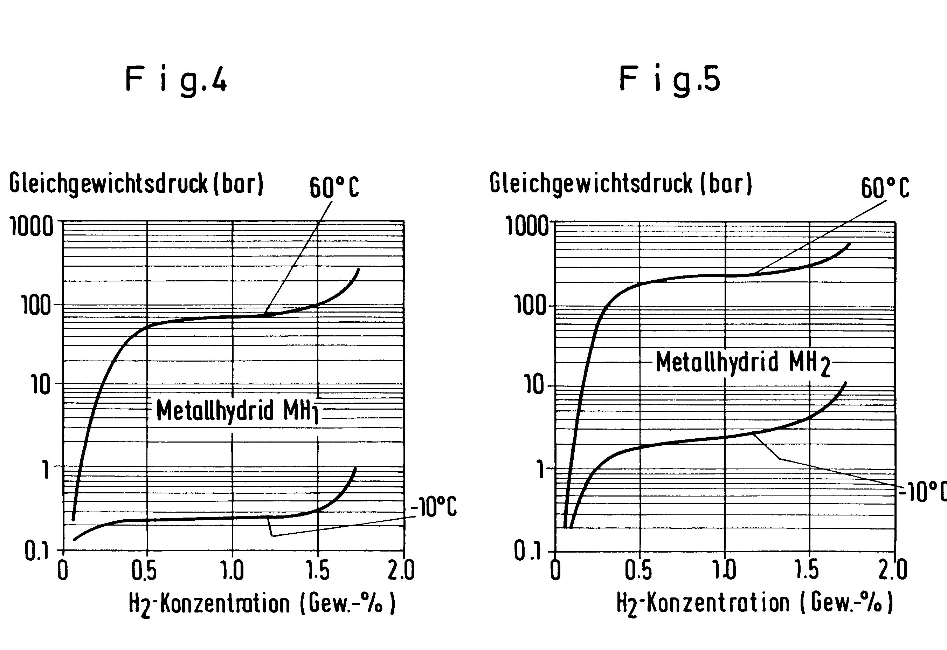

Danach wird das Ventil 47 geschlossen und das Ventil 49 geöffnet. Ventil 48 ist geschlossen. Zur Entladung des Hydridspeichers 37 wird durch Betätigung der Ventile 39, 40 und 43, 44 der Kühlkreislauf 35 abgeschaltet und der Heizkreislauf 36 mit dem Wärmezwischenspeicher 34 zugeschaltet, so daß der Hydridspeicher 37 sich erwärmt und sein Gleichgewichtsdruck stark ansteigt. Die möglichen Verhältnisse sind in Figur 4 schematisch dargestellt. Wenn die Beladung z.B. bei einem Druck von ca. 1 bar und einer Temperatur des Speichers 37 von -10°C stattgefunden hat, wird eine Wasserstoffkonzentration von etwa 1,7 Gewichts-% erreicht. Durch Temperaturerhöhung auf 60°C steigt der Gleichgewichtsdruck auf etwa 200 bar an. Wenn sich nun der Hydridspeicher 38 über das Ventil 49 in den Hydridspeicher 38 entleert, sinkt mit Abnehmen der Wasserstoffkonzentration auf ca. 0,2 Gewichts-% sein Gleichgewichtsdruck bis auf ca. 10 bar ab. Während Hydridspeicher 37 an den Heizkreislauf 36 angeschlossen ist, ist Hydridspeicher 38 über die Ventile 41, 42 mit dem Kühlkreislauf 35 verbunden. Bei einer Kühltemperatur von z.B. -10°C und dem Beladungsdruck von 10 bar wird entsprechend Figur 5 das andersgeartete hydridbildende Metall des Hydridspeichers 38 auf eine Wasserstoffkonzentration von etwa 1,7 Gewichts-% gebracht. Nach Abschluß der Beladung des Hydridspeichers 38 wird Ventil 49 wieder geschlossen, und für Hydridspeicher 37 beginnt ein neuer Beladungszyklus. Hydridspeicher 38 steht jetzt zur Abgabe des hochverdichteten Wasserstoffgases über das Ventil 48 zur Verfügung. Sein Metallyhdrid bewirkt im Unterschied zum Hydridspeicher 37 nach Anschluß an den Heizkreislauf 36 über die Ventile 45, 46 bei einer Speichertemperatur von ebenfalls 60°C und einer Wasserstoffkonzentration von 1,7 Gewichts-% einen Gleichgewichtsdruck von mehreren 100 bar, der erst bei einer Wasserstoffkonzentration von etwa 0,3 Gewichts-% auf den immer noch sehr hohen Wert von 100 bar absinkt.

Dieses Ausführungsbeispiel zeigt, daß Hydridspeicher selbst bei nur wenigen hintereinander geschalteten Stufen sehr hohe Verdichtungen von Wasserstoffgas liefern können, ohne daß es hierzu eines großen energetischen oder anlagentechnischen Aufwandes bedarf. Dies wird insbesondere durch die Auswahl unterschiedlicher Metallhydride für die einzelnen Verdichterstufen erleichtert. Dabei ist es ohne weiteres möglich, die auf unterschiedlichen Druckstufen arbeitenden Metallhydride wärmetechnisch aus der gleichen Wärmequelle und Wärmesenke zu bedienen. Die Unterschiede in den Bindungsenthalpien der verschiedenen Materialien und damit die zeitlichen Schwankungen in Wärme- und Kältebedarf lassen sich durch die dargestellten Zwischenspeicher für Wärme und Kälte verfahrenstechnisch leicht beherrschen.

Die Erfindung ermöglicht es, den Energieaufwand zum Betreiben einer Verdichteranlage auf Hydridspeicherbasis gegenüber der herkömmlichen Betriebsweise auf etwa 20 % abzusenken.

## Patentansprüche

1. Anlage zur Verdichtung von Wasserstoffgas mit mindestens einem Hydridspeicher, der eine Zuleitung für das zu verdichtende Wasserstoffgas und eine Ableitung für das verdichtete Wasserstoffgas sowie an seinem Mantel eine Zu- und eine Ableitung für ein Medium zur wechselweisen Kühlung und Heizung des Hydridspeichers aufweist, wobei die Zu- und Ableitung des Heiz- und des Kühlmediums jeweils Teile eines geschlossenen Heiz- bzw. Kühlkreislaufs sind, mit mindestens einer Umwälzpumpe für das Heiz-/Kühlmedium und mit einer Steuerung zur Betätigung von Absperrventilen in den Zu- und Ableitungen für das Wasserstoffgas und das Heiz-/Kühlmedium zur wechselweisen Be- und Entladung des/der Hydridspeicher,
dadurch gekennzeichnet,
daß der Kühlkreislauf (10) mit dem Wärme von außen aufnehmenden Wärmetauscher (23) (Verdampfer) einer Wärmepumpe (9) und der Heizkreislauf (11) mit dem Wärme nach außen abgebenden Wärmetauscher (19) (Kondensator) derselben Wärmepumpe (9) gekoppelt ist.

2. Anlage nach Anspruch 1,
dadurch gekennzeichnet,
daß mindestens ein Paar von Hydridspeichern (5, 12) vorgesehen ist, die hinsichtlich ihrer Be- und Entladecharakteristik baugleich ausgeführt und hinsichtlich des Be- und Entladens von Wasserstoffgas zeitlich gegeneinander getaktet sind.

3. Anlage nach Anspruch 1 oder 2,
dadurch gekennzeichnet,
daß der kondensator (30) der Wärmepumpe (32) über einen Wärmezwischenspeicher (33) mit dem Heizkreislauf (35) und der Verdampfer (31) der Wärmepumpe (32) uber einen Kaltezwischenspeicher (34) mit dem Kühlkreislauf (36) indirekt gekoppelt ist.

4. Anlage nach Anspruch 2,
dadurch gekennzeichnet,
daß der Kühlreislauf (10) und der Heizkreislauf (11) in den inneren Kühlmittelkreislauf der Wärmepumpe (9) integriert sind, wobei die Mantel der Hydridspeicher (5, 12) wechselweise als Verdampfer bzw. kondensator der Warmepumpe (9) betreibbar sind.

5. Anlage nach einem der Anspruch 1 bis 4,
dadurch gekennzeichnet,
daß die Anlage zur Erzielung einer höheren Wasserstoffverdichtung zwei- oder mehrstufig ausgebildet ist, indem jeweils die Wasserstoffgasableitung eines Hydridspeichers (37) einer Stufe mit der Wasserstoffgaszuleitung eines Hydridspeichers (38) der nachgeschalteten Stufe verbunden ist, daß die verbundenen Hydridspeicher (37, 38) aufeinander folgender Stufen jeweils im Gegentakt betreibbar sind und daß das Hydridmaterial eines Hydridspeichers (37) bei gleicher Temperatur und Beladung einen niedrigeren Gleichgewichtsdruck aufweist als das Hydridmaterial des nachgeschalteten Hydridspeichers (38).

6. Anlage nach einem der Ansprüche 2 bis 5,
dadurch gekennzeichnet,
daß die im Gegentakt betriebenen parallel geschalteten Hydridspeicher (5, 12) am Ende eines Be-/Entladezyklus über ein Ventil (15) wasserstoffseitig miteinander kurzschließbar sind.


## Claims

1. An apparatus for compressing hydrogen gas comprising at least one hydride store which possesses a supply line for the hydrogen gas which is to be compressed and an outlet line for the compressed hydrogen gas and, on its casing, a supply line and an outlet line for a medium for alternating cooling and heating the hydride store, where the supply line and outlet line of the heating and cooling medium each form parts of a closed heating and cooling circuit respectively, with at least one circulating pump for the heating/cooling medium and with a control unit for actuating shut-off valves in the supply- and outlet lines for the hydrogen gas and the heating/cooling medium for the alternate charging and discharging of the hydride store(s), characterised in that the cooling circuit (10) is coupled to the heat exchanger (23) (vaporizer) of a heat pump (9) which receives heat from the exterior, and the heating circuit (11) is coupled to the heat exchanger (19) (condenser) of the same heat pump (9) which emits heat to the exterior.

2. An apparatus as claimed in Claim 1, characterised in that at least one pair of hydride stores (5, 12) is provided which are of identical construction in terms of their charging and discharging characteristics and which operate in phase opposition in respect of the charging and discharging of hydrogen gas.

3. An apparatus as claimed in Claim 1 or 2, characterised in that the condenser (30) of the heat pump (32) is indirectly coupled via an intermediate heat store (33) to the heating circuit (35), and the vaporizer (31) of the heat pump (32) is indirectly coupled via an intermediate cold store (34) to the cooling circuit (36).

4. An apparatus as claimed in Claim 2, characterised in that the cooling circuit (10) and the heating circuit (11) are integrated in the inner coolant circuit of the heat pump (9), where the casings of the hydride stores (5, 12) can be operated alternately as vaporizer and condenser of the heat pump (9).

5. An apparatus as claimed in one of Claims 1 to 4, characterised in that in order to achieve a higher level of hydrogen compression, the apparatus comprises two or more stages in that the respective hydrogen gas outlet line of a hydride store (37) of one stage is connected to the hydrogen gas supply line of a hydride store (38) of the following stage, that the connected hydride stores (37, 38) of consecutive stages can each be operated in phase opposition, and that, at an identical temperature and with identical charging, the hydride material of one hydride store (37) possesses a lower equilibrium pressure than the hydride material of the following hydride store (38).

6. An apparatus as claimed in one of Claims 2 to 5, characterised in that the parallel connected hydride stores (5, 12) which are operated in phase opposition can be short-circuited with respect to one another on the hydrogen side at the end of a charging/discharging cycle via a valve (15).

**Revendications**

1. Installation pour la compression de gaz d'hydrogène comportant au moins un accumulateur à hydrure qui présente une conduite d'alimentation pour le gaz d'hydrogène devant être comprimé et une conduite d'évacuation pour le gaz d'hydrogène comprimé, ainsi que sur son enveloppe, une conduite d'alimentation et une conduite d'évacuation pour un agent destiné alternativement à refroidir et à chauffer l'accumulateur à hydrure, les conduites d'alimentation et d'évacuation de l'agent de chauffage et de réfrigération faisant partie chacune d'un circuit fermé de chauffage et d'un circuit de réfrigération, qui comporte au moins une pompe de circulation pour l'agent de chauffage/de refroidissement, et une commande pour l'actionnement de vannes d'arrêt dans les conduites d'alimentation et d'évacuation pour le gaz d'hydrogène et l'agent de chauffage/de refroidissement, pour le. chargement et le déchargement alternés du/des accumulateur(s), caractérisée
en ce que le circuit fermé de refroidissement (10) est couplé à l'échangeur de chaleur (23) (évaporateur) absorbant de la chaleur de l'extérieur et faisant partie d'une pompe à chaleur (9), et le circuit fermé de chauffage (11) est couplé à l'échangeur de chaleur (19) (condenseur) délivrant de la chaleur vers l'extérieur et faisant partie de la même pompe à chaleur (9).

2. Installation selon la revendication 1, caractérisée
en ce qu'il est prévu au moins une paire d'accumulateurs à hydrure (5, 12) qui sont de conception identique quant à leurs caractéristiques de chargement et de déchargement, et qui fonctionnent en opposition de phase quant au chargement et déchargement du gaz d'hydrogène.

3. Installation selon la revendication 1 ou 2, caractérisée
en ce que le condenseur (30) de la pompe à chaleur (32) est couplé indirectement au circuit fermé de chauffage (35) au moyen d'un accumulateur de chaleur intermédiaire (33), et l'évaporateur (31) de la pompe à chaleur (32) est couplé indirectement au circuit fermé de refroidissement (36) au moyen d'un accumulateur de froid intermédiaire (34).

4. Installation selon la revendication 2, caractérisée
en ce que le circuit fermé de refroidissement (10) et le circuit fermé de chauffage (11) sont intégrés dans le circuit fermé interne de l'agent réfrigérant de la pompe à chaleur (9), les enveloppes des accumulateurs à hydrure (5, 12) pouvant fonctionner alternativement en tant qu'évaporateur et en tant que condenseur de la pompe à chaleur (9).

5. Installation selon l'une des revendications 1 à 4,
caractérisée
en ce que pour atteindre une compression plus élevée de l'hydrogène, l'installation est du type à deux étages ou plus, à savoir que la conduite d'évacuation de gaz d'hydrogène d'un accumulateur à hydrure (37) d'un étage, est reliée à la conduite d'alimentation en gaz d'hydrogène d'un accumulateur à hydrure (38) de l'étage en aval, en ce que les accumulateurs à hydrure (37, 38) reliés entre-eux et faisant partie d'étages qui se succèdent peuvent fonctionner en opposition de phase, et en ce que le matériau formant un hydrure d'un accumulateur à hydrure (37) présente, pour une même température et un même chargement, une pression d'équilibre plus faible que celle du matériau formant un hydrure de l'accumulateur à hydrure (38) en aval.

6. Installation selon l'une des revendications 2 à 5,
caractérisée
en ce que les accumulateurs à hydrure (5, 12) montés en parallèle et fonctionnant en opposition de phase, peuvent être court-circuités entre-eux côté hydrogène, au moyen d'une soupape (15), à la fin d'un cycle de chargement/déchargement.

# Fig.1

EP 0 333 632 B1

# Fig.2

EP 0 333 632 B1

Fig.3

Fig.4

Gleichgewichtsdruck (bar)

Metallhydrid MH₁

H₂-Konzentration (Gew.-%)

Fig.5

Gleichgewichtsdruck (bar)

Metallhydrid MH₂

H₂-Konzentration (Gew.-%)

EP 0 333 632 B1